# EUROPEAN PATENT APPLICATION

(11) **EP 1 746 596 A1**
(43) Date of publication of application: **24.01.2007**
(21) Application number: 05254520.9
(22) Date of filing: 20.07.2005
(51) Int. Cl.: G11B 20/10

(54) **Sports mode for a portable electronic device**

(71) Applicant: Tatung Co., Ltd., Taipei City 104, R.O.C. (TW)
(72) Inventor: Chen, Chun-Ru, Taipei City 104 R.O.C. (TW); Wang, Yueh-Chi, Taipei City 104 R.O.C. (TW); Chan, Chieh-Yu, Taipei City 104 R.O.C. (TW); Hsu, Guang-Min, Taipei City 104 R.O.C. (TW)
(74) Representative: Tranter, Andrew David

(57) **Abstract**

The present invention relates to a method of providing a sport mode of a portably electronic device having a hard disk and a memory device. The method includes: (A) determining whether the portably electronic device switches to the sport mode; (B) switching to the sport mode and downloading at least one multimedia file from the hard disk to the memory device; (C) turning off the hard disk; (D) playing at least one multimedia file from the memory device.

## Description

### BACKGROUND OF THE INVENTION

### 1. Field of the Invention

The present invention relates to a method of providing a sport mode, and more particularly to a method of providing a sport mode of a portable electronic device.

### 2. Description of Related Art

To satisfy the demands of consumers, the products not only must be increasingly smaller for easy carrying and space-saving but also the products must have more distinctive features. Thus, a particular objective in the design of a portable electronic devices has been to evolve personal entertainment devices from being only unitary to multi-functional, for example, playing multimedia files (such as MP3 media files, WMA media files, WAV media files, or MPEG media files), editing documents etc. Those portable electronic devices can be an MP3 player or a Personal Digital Assistant (PDA).

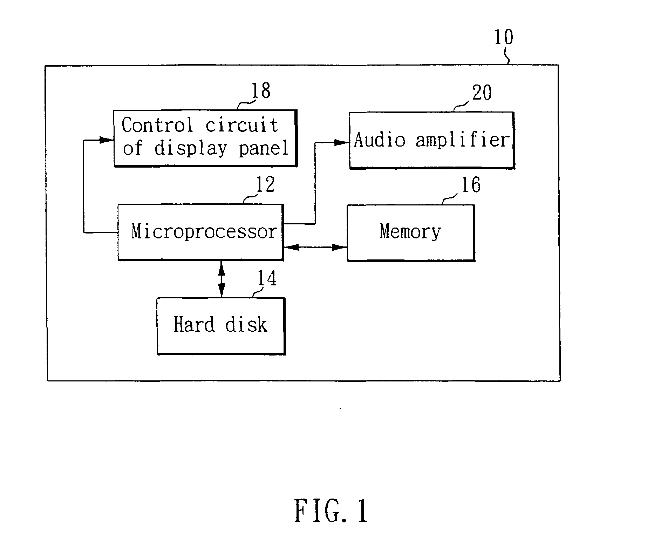

As shown in Fig. 1, an MP3 player includes the following components: a microprocessor, a hard disk, a memory, a driving circuit of display panel, and an audio amplifier. The hard disk is used for storing MP3 media files. When the user wants to play the MP3 files, the microprocessor will download MP3 files from the hard disk while preceding the MP3 decoding process to bring out the audio signal, and then it will send the audio signal to the audio amplifier. The audio amplifier can connect to speakers or earphones, whereby the user can listen to music of the corresponding audio signal by using earphones or speakers. In addition, memory can be a temporary information storing apparatus, and the driving circuit of display panel is provided for driving the display panel. Thus, the MP3 player can instantly display messages to the user.

However, the portable electronic device has the following drawback: to increase the capacity of the memory, a hard disk is used as an information storing apparatus, but it easily malfunctions through shaking when a user runs, exercises, etc. In general, the above-described portable electronic device cannot provide the safeguard for the hard disk while providing a sport mode for the user, i.e., such a device cannot satisfy the desire of listening music while exercising.

### SUMMARY OF THE INVENTION

The present invention has been accomplished under the circumstances in view. To satisfy the desire of consumers for a sport mode of a portable electronic device, and also to make sure it can function properly under the sport mode, the present invention discloses a method of providing a sport mode of a portable electronic device, which has a hard disk. The method comprises the steps of: (A) determining whether the portable electronic device switches to the sport mode; (B) switching to the sport mode and downloading at least one multimedia file from the hard disk to a memory device; (C) turning off the hard disk; (D) playing the at least one multimedia files from the memory device.

Such portable electrical device can be an MP3 player or a Personal Digital Assistant (PDA). A memory device can be dynamic RAM, static RAM, or flash memory. The multimedia files in the memory device can be MP3 media files, or WMA media files. The hard disk has a better anti-shock capability in the off-mode, so that the possibility of breakdown of the portable electrical device can be decreased.

### BRIEF DESCRIPTION OF THE DRAWINGS

FIG. 1 is a block diagram of the functionality of the portable electronic device.
FIG. 2 is a flowchart of the method of the portable electronic device according to the present invention.
FIG. 3 is a schematic exploded view of the functional menu of the portable electronic device.
FIG. 4 is a schematic exploded view of another functional menu of the portable electronic device.

### DETAILED DESCRIPTION OF THE PREFERRED EMBODIMENT

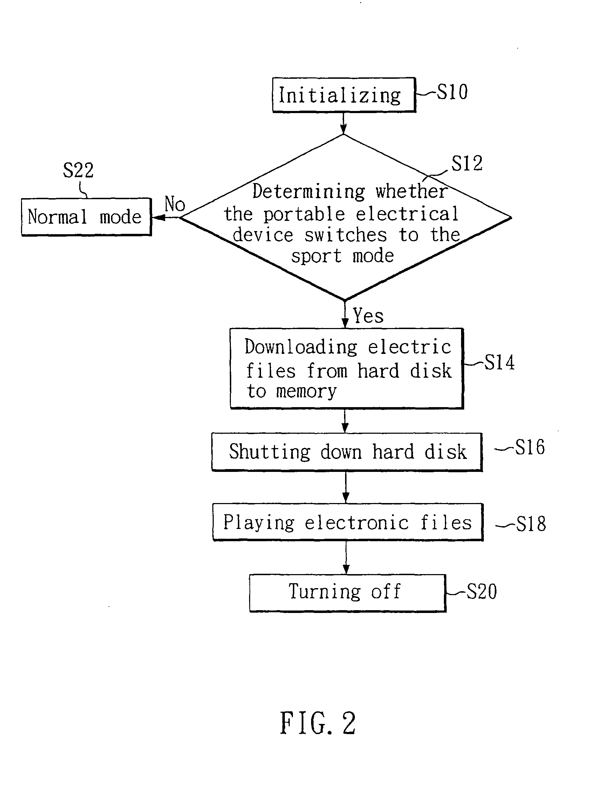

To satisfy the need of consumers for a portable electronic device 10 in sport mode wherein malfunction due to shaking of the device is avoided, the present invention discloses a method of providing a sport mode of a portable electronic device. FIG. 1 shows the structure of the portable electronic device, and FIG. 2 shows the steps of the method of providing a sport mode, which are described as follows.

Step S 10: initializing.

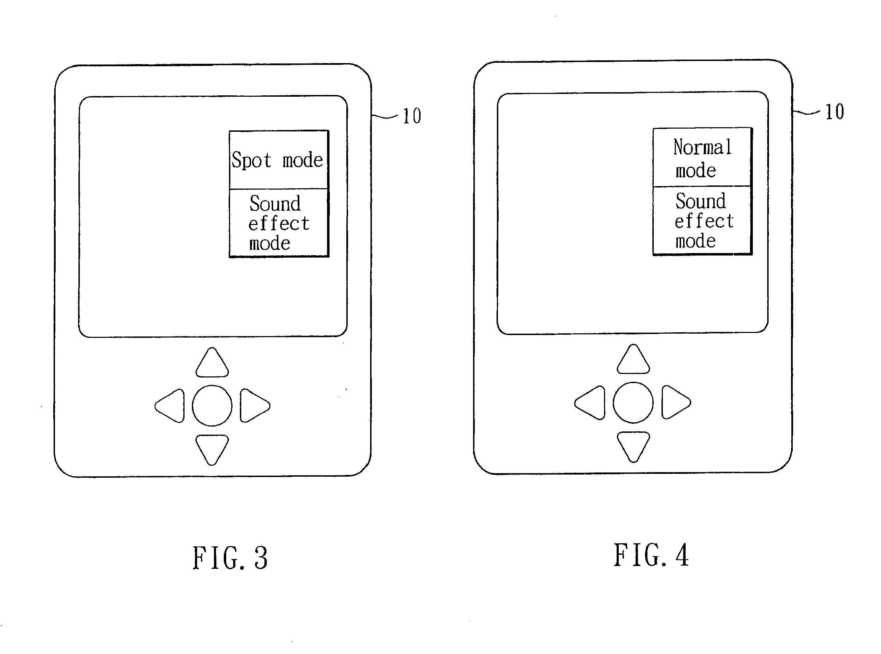

Step S12: determining whether the portable electronic device 10 switches to the sport mode. If it does not, the user chooses the normal mode (Step S22) of the portable electronic device 10 depending on the need, for example, choosing the favored MP3 media files to play. As shown in FIG. 3, the functional menu of the portable electronic device provides the choices of both sport mode and sound effect mode for the user. The sound effect mode includes the following choices of sound effects: Natural, Classic, Rock, Jazz, Pop, Soft, and DBB. The portable electronic device 10 also provides features such as single playback, sequence playback, and random playback. When the user carries the portable electronic device while exercising, the user chooses the sport mode; after choosing the sport mode, the portable electronic device 10 then switches to the sport mode.

Step S 14: downloading electronic files from hard disk 14 to memory 16. When the portable electronic device 10 switches to the sport mode, it makes all the electronic files, which are stored in the hard disk 14, into a list. Then the user chooses the electronic files from the list as per requirement, or the microprocessor 12 of the portable electronic device 10 randomly or sequentially plays the electronic files. Finally, the microprocessor 12 reads the electronic files from the hard disk 14 of the portable electronic device 10, and then stores the files in the memory 16 of the portable electronic device 10. Among the variety of memories, the memory 16 can be dynamic RAM, static RAM, or flash memory.

Step S16: shutting down the hard disk 14. After all the electronic files are stored in the memory 16, the microprocessor 12 of the portable electronic device 10 requests the hard disk 14 to shut down. The purpose of such a request is to avoid a situation in which the user is using the above-mentioned electronic device 10 while exercising may cause the hard disk 14 not to function properly due to shaking.

Step S 18: playing electronic files. When the portable electronic device 10 is under the sport mode, the electronic files, which are stored in the memory 16 of the portable electronic device 10, can be decoded in accordance with the coding format of the electronic files, using the corresponding decoding process to produce audio signal. For example, MP3 media files can be played using the decoding process of MP3 media files; WMA media files can be played using the decoding process of WMA media files, and so on. As a result of the decoding process, the user can listen to the music corresponding to the audio signal through the earphones or speakers. Moreover, before the sport mode is selected, the portable electronic device 10 will display the number and title of all the media files stored in the memory 16. Thus, the user knows what and which files will be played after switching on the sport mode, and also the user can set the playing parameter of the files if preferred. For example, the playing parameter can be single playback, sequence playback, random playback, or sound effects, such as Natural, Classic, Rock, Jazz, Pop, Soft, and DBB.

Furthermore, after the user has finished exercising, the functional menu can be recalled, as shown in FIG. 4. The functional menu will provide the normal mode and sound effect mode etc for the user to choose. Moreover, after the user has switched to S22, the portable electronic device 10 will start up the hard disk 14, and then the electronic device 10 will switch to the normal mode S22.

Therefore, by using the method of present invention in a portable electronic device 10, the user not only achieves the goal of exercise but also enjoys listening to the music at the same time without the malfunction of the hardware.

Although the present invention has been explained in relation to its preferred embodiment, it is to be understood that many other possible modifications and variations can be made without departing from the spirit and scope of the invention as hereinafter claimed.

## Claims

1. A method of providing a sport mode of a portable electronic devicehaving a hard disk and a memory device, comprising the steps of:
(A) determining whether said portable electronic device is in sport mode;
(B) switching to said sport mode aud downloading at least one multimedia file from said hard disk to the memory device;
(C) turning off said hard disk; and
(D) playing at least one multimedia file from said memory device.

2. The method as claimed in claim 1, wherein said portable electronic device is a multimedia player.

3. The method as claimed in claim 2, wherein said multimedia player is an MP3 player.

4. The method as claimed in claim 2, wherein said multimedia player is a Personal Digital Assistant (PDA).

5. The method as claimed in claim 1, wherein said memory device is a dynamic RAM.

6. The method as claimed in claim 1, wherein said memory device is a flash memory.

7. The method as claimed in claim 1, wherein said memory device is a static RAM.

8. The method as claimed in claim 1, wherein said electronic file is an MP3 media file.

9. The method as claimed in claim 1, wherein said electronic file is a WMA media file.
